# EUROPÄISCHE PATENTSCHRIFT

(11) **EP 3 309 241 B1**
(45) Veröffentlichungstag und Bekanntmachung des Hinweises auf die Patenterteilung: **12.02.2020**
(21) Anmeldenummer: 17196543.7
(22) Anmeldetag: 16.10.2017
(51) Int. Cl.: C10L 1/02, C11B 3/08, C11C 3/00

(54) **VERFAHREN UND VERWENDUNG EINES OXIDATIONSMITTELS ZUM OXIDIEREN VON ELEMENTAREM SCHWEFEL UND/ODER SCHWEFELVERBINDUNGEN IN GEGENWART VON FETTSÄUREDERIVATEN**
METHOD AND THE USE OF AN OXIDIZING AGENT FOR THE OXIDATION OF ELEMENTAL SULPHUR AND/OR SULPHUR COMPOUNDS IN THE PRESENCE OF FATTY ACID DERIVATIVES
PROCÉDÉ ET UTILISATION D'UN AGENT D'OXYDATION PERMETTANT L'OXYDATION DU SOUFRE ÉLÉMENTAIRE ET/OU DES COMPOSÉS DU SOUFRE EN PRÉSENCE DE DÉRIVÉS D'ACIDE GRAS

(30) Priorität: 17.10.2016 DE 102016119756
(43) Veröffentlichungstag der Anmeldung: 18.04.2018
(73) Patentinhaber: UBPM Umwelt-Beratung und Produkt-Management GmbH & Co. KG, 85414 Kirchdorf (DE)
(72) Erfinder: KRIPPENSTAPEL, Christian, 37181 Hardegsen-Asche (DE)
(74) Vertreter: Kuhnen & Wacker Patent- und Rechtsanwaltsbüro PartG mbB

(56) Entgegenhaltungen:
- WO-A1-2004/083350
- WO-A1-2012/054946
- DE-T2- 69 301 289
- US-A1- 2011 197 497

## Beschreibung

### Technisches Gebiet

Die Erfindung betrifft ein Verfahren nach dem Oberbegriff des Anspruchs 1 zum Oxidieren von elementarem Schwefel und/oder Schwefelverbindungen in Gegenwart von Fettsäurederivaten. Das Verfahren ist beispielsweise für die Entschwefelung bei der Erzeugung von Biodiesel aus gebrauchten Kochfetten, Spaltfetten, Separatorfetten oder bestimmten nachwachsenden Rohstoffen von Bedeutung. Sie kann auch zur Desodorierung anderer Produkte auf Basis der genannten Ester, wie z.B. Weichmacher und Lösemittel, die oftmals unerwünschte, schwefelhaltige Stinkstoffe enthalten, verwendet werden. Ferner betrifft die Erfindung die Verwendung eines Oxidationsmittels nach dem Oberbegriff von Anspruch 14.

### Stand der Technik

Die Entschwefelung stark schwefelhaltiger Fettsäuren bzw. Fettsäurederivate gewinnt aus mehreren Gründen an Bedeutung. Hier wird beispielhaft vor allem auf Sachverhalte Bezug genommen, die mit der Erzeugung von Biodiesel in Zusammenhang stehen und die gegenwärtig besondere Bedeutung erlangt haben. Es ist aber auch möglich und sinnvoll, das erfindungsgemäße Verfahren und die erfindungsgemäße Verwendung in anderen technischen Gebieten einzusetzen, in denen der Gehalt an Schwefel in fettsäurehaltigen Materialien verringert werden soll.

In verschiedenen Gesetzesgeltungsbereichen nehmen die gesetzlichen Anforderungen im Hinblick auf einen geringen Schwefelgehalt von Biodiesel immer mehr zu. Bisweilen ist es erforderlich, den mit der Herstellung von Biodiesel einhergehende Energieverbrauch und/oder die damit einhergehende Freisetzung treibhausrelevanter oder gesundheitsschädlicher Stoffe zu minimieren. In Zusammenhang mit diesen Anforderungen wurden Grenzwerte definiert, anhand derer der Marktzugang entsprechender Produkte zugelassen oder verweigert wird. Die deutsche Industrienorm DIN-EN 14 214 erlaubt zum Beispiel höchstens 10 mg Schwefel pro kg Kraftstoff.

Gesetzliche Vorgaben, aber auch der Wunsch nach einer nachhaltigen umweit- und gesundheitsverträglichen Wirtschaftsweise sowie eine wirtschaftliche Attraktivität können eine Verwendung von Stoffen oder Stoffgemischen, die verbreitet auch als Abfälle angesehen werden, erforderlich machen oder wünschenswert erscheinen lassen. Beispielhaft können hier gebrauchte Fette und Öle aus der Gastronomie einschließlich Abscheiderfette genannt werden. Solche Ausgangsmaterialien enthalten oft nennenswerte Mengen an Schwefelverbindungen, die unter anderem aus Zwiebeln stammen oder durch Fäulnisprozesse in Abscheidern aus schwefelhaltigen Aminosäuren gebildet werden, und gegebenenfalls auch elementaren Schwefel. Ein Teil der Schwefeleintragsquellen ist noch unbekannt.

Andererseits besteht auch bei der Nutzbarmachung von Fettsäuren oder Fettsäurederivaten aus nachwachsenden Rohstoffen bereits bei der Erstverwendung teilweise ein Entschwefelungsbedarf, da einige Pflanzen, die zur Gewinnung solcher Produkte genutzt werden, in ihren wesentlichen, öl- oder fetthaltigen Teilen, zumeist den Samen, erhebliche Schwefelgehalte aufweisen. Beispielhaft können Senf, der nennenswerte Mengen thermisch gut zersetzbarer Thiocyanate enthält, und, je nach Züchtung, Raps genannt werden. Um eine Produktverschlechterung durch übermäßigen Mikrobenbefall, beispielsweise während eines Transports oder einer Lagerung, zu verhindern, werden aus Pflanzen gewonnenen Öle oder Fette zumeist sehr bald nach der Gewinnung beispielsweise durch Pressen in einer Ölmühle und zumeist direkt am oder in der Nähe des Herstellungsorte raffiniert. Dabei gelangen unter anderem Sulfide und Disulfide in relevanten Mengen in das Rohfettsäureprodukt bzw. verbleiben in diesem. Andererseits entsteht bei diesen Raffinationsvorgängen als Nebenprodukt bzw. Abfallprodukt Spaltfett, dass auch als ein Ausgangsmaterial beispielsweise für die Biodieselherstellung Verwendung finden kann.

Herkömmlicherweise werden geringe Mengen stark schwefelhaltiger Produkte mit größeren Mengen wenig schwefelhaltiger Produkte verschnitten, um gesetzlichen Grenzwerten zu genügen. Bei Betrachtung des Biodiesels bedeutet dies, dass nur ein geringer Anteil Biodiesel aus Abfallfetten einem größeren Anteil Biodiesel aus schwefelärmeren Frischölen oder einem größeren Anteil stark entschwefelten mineralischen Diesels zugesetzt werden kann. Soll jedoch aufgrund der obigen Erwägungen der Anteil an recycelten Ausgangsstoffen erhöht werden, führt dies zu einer Überschreitung der gesetzlichen Grenzwerte.

Die Form, in der Schwefel vorliegt, ist entscheidend dafür, wie gut sich der Schwefel durch Extraktionsverfahren mit hydrophiler Phase aus einem lipophilen Stoffgemisch entfernen lässt. Schwefelsäure und Sulfonsäuren, die in vielen Rohstoffen einen Teil des Schwefels ausmachen, lassen sich beispielsweise gut extrahieren. Ein nicht unbedeutender Teil des Schwefels liegt jedoch regelmäßig in Form weniger hydrophiler Verbindungen vor, die dementsprechend durch eine Extraktion mit einer hydrophilen Phase nicht ausreichend entfernbar sind.

Die gängige Methode zur Entschwefelung erdölbasierter Produkte ist die Hydrodesulfurierung. Dabei werden die schwefelhaltigen Verbindungen, die andere sind als die Schwefelverbindungen, die üblicherweise in Abfallfetten und pflanzlichen Rohstoffen vorkommen, vor allem Thiophene, bei erhöhter Temperatur an Metallkatalysatoren, meist aus Nickel, durch Wasserstoff reduziert und als H₂S ausgetragen. Diese Methode kommt für native Öle grundsätzlich nicht in Frage, da es hierbei zu einer Aufsättigung der in den Fettsäuren vorliegenden Doppelbindungen mit Wasserstoff kommt, die zu einer starken Stockpunktserhöhung ("Fetthärtung") und damit zu für Biodiesel unbrauchbaren Produkten führt. Eine Variante dieser Methode ist das Neste-Verfahren, bei dem der Prozess so geführt wird, dass gezielt Kettenbrüche induziert werden. Das Produkt hat dann zwar einen niedrigen Stockpunkt, ist allerdings kein Gemisch von Fettsäurederivaten, insbesondere Fettsäureestern, sondern ein Kohlenwasserstoffgemisch ohne Estergruppen, also kein Fettsäuremethylester.

Aus der Patentschrift DE 693 01 289 T2 ist ein Verfahren zum Raffinieren und Desodieren von Nimöl bekannt.

### Nachteile des Standes der Technik

Die herkömmlicherweise verwendeten Verfahren zum Entschwefeln von Biodiesel oder von Rohstoffen für die Biodieselherstellung sind mit Nachteilen verbunden. Im Fall von destillativen Verfahren sind dies hohe Kosten für Anschaffung und Betrieb der technisch aufwändigen Anlagen. Vor allem aber ist ein technisch bedingter Massenverlust des Destillats gegenüber der Vorlage in der Größenordnung von 6 Massen-% nachteilig. Herkömmliche, nicht-destillative Verfahren haben sich entweder für die Entschwefelung von Fettsäuren und/oder Fettsäurederivaten als unwirksam erwiesen, oder sie führen zu einer unvorteilhaften Veränderung bestimmter Fettsäuren und/oder Fettsäurederivate. Dies führt zu weiteren Problemen, unter anderem zur Verfestigung in Temperaturbereichen, die für den Betrieb von Fahrzeugen üblich sind, gegebenenfalls bereits bei Temperaturen von ca. 20 bis 25°C oder sogar noch darüber. Ein Grund dafür ist, dass, insbesondere bei reduktiven Behandlungen, eine Fetthärtung durch eine Hydrierung von Doppelbindungen auftreten kann.

Beispielhaft können als einige herkömmliche Verfahren zusammen mit den jeweiligen Nachteilen wie folgt Verfahren benannt werden: Die oxidative Entschwefelung mittels Sauerstoff oder H₂O₂ greift unter den herkömmlichen Bedingungen die nativen Fettsäuren und/oder Fettsäurederivate in unvertretbarem Umfang an und ist damit praktisch nicht anwendbar. Gleiches gilt für die katalytische Alkylierung zur nachfolgenden destillativen Abtrennung der Schwefelverbindungen, wobei die Siedepunkte der Fettsäurederivate ohnehin in einem Bereich liegen, der eine destillative Abtrennung der Derivate undurchführbar macht. Die selektive Extraktion mit geeigneten Lösemitteln scheitert daran, dass für die Entschwefelung von Fettsäuren und/oder Fettsäurederivaten kein geeignetes Lösemittel bekannt ist. Die selektive Adsorption an schwefelaffinen Sorbentien gelingt nicht, da die in den erdölbasierten Rohprodukte vorherrschenden, aromatischen Schwefelverbindungen, wie Thiophene, bei der Entschwefelung von Fettsäuren und/oder Fettsäurederivaten keine Rolle spielen. Für die selektive Membranpermeation bzw. -pervaporation sind keine geeigneten Membranmaterialien bekannt. Die destillative Abtrennung der störenden Schwefelverbindungen aus Fettsäurederivaten ist bereits ein etabliertes Verfahren, da der Markt ohnehin destillierte Fettsäurederivate verlangt. Jedoch führt der damit verbundene Aufreinigungseffekt, abgesehen von den schon zuvor thematisierten Nachteilen, nicht zuverlässig zu einem hinreichenden Rückgang der Schwefelgehalte.

### Beschreibung der Erfindung

Die Aufgabe der Erfindung ist eine Verbesserung der Entschwefelung von Fettsäurederivate enthaltenden Materialien. Die Lösung der Aufgabe wird durch das Verfahren nach Anspruch 1 und/oder die Verwendung nach Anspruch 14 gelöst. Insbesondere wird die Aufgabe durch das Einbinden des Verfahrens nach Anspruch 1 in ein Entschwefelungsverfahren und/oder durch die Verwendung eines Oxidationsmittels gemäß Anspruch 14 in einem Entschwefelungsverfahren ermöglicht.

Das erfindungsgemäße Verfahren zum Oxidieren von elementarem Schwefel und/oder von Schwefelverbindungen in Gegenwart von Fettsäurederivaten umfasst wenigstens einen Schritt (a), bei dem ein Reaktionsansatz hergestellt wird, der ein Oxidationsmittel und ein Ausgangsstoffgemisch enthält. Das Ausgangsstoffgemisch enthält Fettsäurederivate. Außerdem enthält das Ausgangsstoffgemisch elementaren Schwefel und/oder Schwefelverbindungen. Der Reaktionsansatz ist im Wesentlichen wasserfrei. Im Rahmen der vorliegenden Erfindung bedeutet "im Wesentlichen wasserfrei", dass der Anteil an Wasser im Reaktionsansatz zwischen 0 und 2 Massen-%, vorzugweise zwischen 0 und 1 Massen-%, beträgt und schließt damit auch vollständig wasserfrei mit ein, ist aber nicht hierauf beschränkt. Um den Reaktionsansatz im Wesentlichen wasserfrei zu erhalten, kann dieser beispielweise mit einer Glycerinphase gewaschen werden. Ferner weist der Reaktionsansatz ein alkalisches Milieu auf, d.h., wenn der Reaktionsansatz mit Wasser bidest. im Volumenverhältnis 1:1 ausgeschüttelt wird, liegt der pH-Wert der erhaltenen wässerigen Phase bei größer 7, vorzugsweise bei größer 9 und insbesondere bei größer 11.

Außerdem umfasst das erfindungsgemäße Verfahren einen Schritt (b), bei dem der in Schritt (a) hergestellte Reaktionsansatz zur Reaktion gebracht wird, wobei der elementare Schwefel in Gegenwart der Fettsäurederivate oxidiert wird und/oder die Schwefelverbindungen in Gegenwart der Fettsäurederivate oxidiert werden. Dem Reaktionsansatz wird in Schritt (a) und/oder nach Schritt (b) eine erste hydrophile Phase, welche vorzugsweise ein polares Agens enthält, zugegeben. Dabei weist die erste hydrophile Phase ein alkalisches Milieu auf. Hierbei bedeutet "alkalisches Milieu", dass der pH-Wert der ersten hydrophilen Phase bei größer 7, vorzugsweise bei größer 9 und insbesondere bei größer 11 liegt. Falls die erste hydrophile Phase wasserfrei ist, bedeutet "alkalisches Milieu", dass, wenn die erste hydrophile Phase mit Wasser bidest. im Volumenverhältnis 1:1 ausgeschüttelt wird, der pH-Wert der erhaltenen wässerigen Phase bei größer 7, vorzugsweise bei größer 9 und insbesondere bei größer 11 liegt.

Das erfindungsgemäße Verfahren ermöglicht die Oxidation von elementarem Schwefel und/oder Schwefelverbindungen in Gegenwart von Fettsäurederivaten ohne die chemischen Veränderungen bzw. Schäden, die bei Einsatz eines Oxidationsmittels an Fettsäurederivaten zu erwarten sind und welche die Fachwelt bisher von der Oxidation von elementarem Schwefel und/oder Schwefelverbindungen in Gegenwart von Fettsäurederivaten abgehalten haben. Dies wird durch die Oxidation im Alkalischen ermöglicht. Der hohe pH-Wert wirkt regulierend auf die Oxidationskraft der eingesetzten Oxidationsmittel und führt, bei weitgehender Vermeidung einer Schädigung von Fettsäurederivaten, dazu, dass elementarer Schwefel und/oder Schwefelverbindungen durch Oxidation in chemische Verbindungen überführt werden, die durch Extraktion mit einer hydrophilen Phase wirksam entfernt werden können.

Wesentlich beim erfindungsgemäßen Verfahren ist, dass das Oxidationsmittel in dem alkalischen, im Wesentlichen wasserfreien Reaktionsansatz, also gewissermaßen in der hydrophoben Phase, vorhanden ist bzw. dahin eingebracht wird und die Oxidation des Schwefels und/oder der Schwefelverbindungen in dieser Phase stattfindet. Erfindungsgemäß wird im Gegensatz zu früheren Ansätzen gerade nicht angestrebt, den Schwefel und/oder die Schwefelverbindungen erst in eine hydrophile Phase zu überführen und dann in der hydrophilen Phase mit einem dort vorhandenen Oxidationsmittel zu oxidieren.

Somit wird erstmals eine Alternative zu destillativen Verfahren ohne den Aufwand und die Stoffverluste in Form von Destillationsrückständen, die mit einer Destillation einhergehen, geschaffen. Darüber hinaus ermöglicht das erfindungsgemäße Verfahren durch seine höhere Leistungsfähigkeit den Einsatz noch höherer Anteile stark schwefelhaltiger Rohstoffe oder den Einsatz noch höher schwefelhaltiger Rohstoffe.

Das erfindungsgemäße Verfahren ermöglicht beispielsweise die Herstellung von Diesel mit einem hohen Biodieselanteil, also mit hohen Anteilen von, gegebenenfalls recycelten, pflanzlichen Rohstoffen, in denen auch verhältnismäßig langkettige und/oder mehrfach ungesättigte Fettsäurereste vorkommen. Letztere würden durch herkömmliche reduktive Entschwefelungsverfahren in einem Ausmaß verändert, dass eine für Diesel inakzeptable Stockpunkterhöhung ("Fetthärtung") die Folge wäre.

Außerdem ist die erfindungsgemäße Oxidation im alkalischen Milieu mit einem weiteren Vorteil verbunden. Während in einem Beispielversuch der Erfinder durch die Peroxidbehandlung schwefelhaltiger Rohstoffe bei einem sauren pH-Wert bei gleichzeitiger Umesterung und/oder Veresterung eine stabile, demulgatorenresistente und auch durch Zentrifugieren nicht zu brechende Emulsion hervorbrachte, was eine Trennung des Reaktionsproduktes von der hydrophilen Phase vereitelte, treten derartige Probleme bei den entsprechenden Reaktionen bei einem alkalischen pH-Wert nicht auf.

Des Weiteren wird dem Reaktionsansatz in Schritt (a) und/oder nach Schritt (b) ein Phasentransfermittel zugegeben. Dabei enthält das Phasentransfermittel eine Substanz oder eine beliebige Kombination von Substanzen oder besteht daraus, die ausgewählt ist bzw. sind aus einer Gruppe, die besteht aus: Ether, insbesondere Tetrahydrofuran, 1,4-Dioxan; Keton, insbesondere Aceton; Isopropylidenglycerin, sowie deren Lösungen, Mischungen und Zubereitungen. Dabei kann das Phasentransfermittel nach der Zugabe zum Reaktionsansatz vorzugsweise in einem Anteil von bis zu 2 Massen-%, insbesondere zwischen 1 und 2 Massen-%, bezogen auf den Reaktionsansatz vorliegen.

Das Vorhandensein eines Phasentransfermittels im Reaktionsansatz erleichtert den Übergang des Oxidationsmittels in den bzw. das Vorhandensein des Oxidationsmittels im wasserfreien Reaktionsansatz, der einen eher hydrophoben Charakter aufweist. Hierdurch wird die Oxidation des Schwefels und/oder der Schwefelverbindungen im Reaktionsansatz erleichtert und die im Reaktionsansatz letztlich verbleibenden SchwefelGehalte können weiter verringert werden.

Vorteilhafte Weiterbildungen des erfindungsgemäßen Verfahrens sind Gegenstand der abhängigen Ansprüche 2 bis 13.

So kann die erste hydrophile Phase Glycerin, Glykol oder ein Gemisch derselben enthalten oder daraus bestehen.

Diese Weiterbildung des Verfahrens ermöglicht es, Schwefelverbindungen, die durch Oxidation aus elementarem Schwefel oder aus zu einem geringeren Grad oxidierten Schwefelverbindungen hervorgegangen sind, sowie Schwefelverbindungen, die bereits in ausreichend hydrophiler Form, beispielsweise als Sulfonsäuren, im Ausgangsstoffgemisch vorlagen, mittels der ersten hydrophilen Phase noch effektiver aus der lipophilen Phase zu extrahieren. Dadurch wird der Schwefelgehalt der lipophilen Phase weiter verringert.

Das Verwenden einer Glycerinphase als hydrophile Phase ist mit folgenden weiteren Vorteilen verbunden. Glycerin fällt bei der Umesterung von Glycerinestern von Fettsäuren ohnehin an. Eine Weiternutzung dessen ist also nur folgerichtig und effizient. Glycerin bietet gegenüber anderen Sorbentien damit einen Kostenvorteil. Auch bei Betrachtung von Entsorgungsaspekten ist Glycerin vorteilhaft. Das Glycerin kann nämlich nach der erfindungsgemäßen Verwendung destillativ von Verunreinigungen befreit und dann, beispielsweise als Futtermittelzusatzstoff, für technische Anwendungen, als sogenanntes Boostersubstrat für Biogasanlagen oder als Frostschutzmittel vermarktet werden. Das Destillieren des Glycerins zum Entfernen von Schwefelverbindungen stellt hier keinen Nachteil im Vergleich zum Fall der Vermarktung des Glycerins aus einer Umesterung ohne Entschwefelung dar, da auch in einem solchen Fall das Glycerin ohnehin nur nach Destillation ausreichend rein für eine Vermarktung ist.

Das Verfahren kann ferner einen Schritt (c) aufweisen, in dem eine erste hydrophile Phase vom Rest des Reaktionsansatzes, der lipophilen Phase, abgetrennt werden kann. Diese erste hydrophile Phase enthält Schwefelverbindungen, die in Schritt (a) und/oder Schritt (b) durch Oxidation aus dem im Ausgangsstoffgemisch enthaltenen elementaren Schwefel und/oder aus den im Ausgangsstoffgemisch enthaltenen Schwefelverbindungen hervorgegangen sind und/oder die bereits in der Form, in der sie in der ersten hydrophilen Phase enthalten sind, im Ausgangsstoffgemisch vorlagen.

Die Art des Abtrennverfahrens richtet sich nach dem Größenmaßstab des Verfahrens, der Art des Sorbens (fest, flüssig) und auch nach anderen Parametern. Im Labormaßstab kann beispielsweise ein Schütteltrichter Verwendung finden und bei einem Verfahren im Produktionsmaßstab beispielsweise ein zentrifugenbasiertes Trennverfahren. Weitere Arten von Trennverfahren sind ebenfalls möglich.

Diese Weiterbildung des Verfahrens ermöglicht es, die in der hydrophilen Phase enthaltenen Schwefelverbindungen endgültig und wenigstens teilweise von den Fettsäuren und/oder Fettsäurederivaten in der lipophilen Phase zu trennen. Die lipophile Phase steht damit für weitere optionale Verfahrensschritte bereit, beispielsweise einen weiteren Umesterungsschritt oder einen Waschschritt, gefolgt von einem Trocknungsschritt.

In einem Schritt (d), der vor Schritt (a) ausgeführt werden kann, kann eine säurekatalysierte Umesterung von Fettsäurederivaten im Gesamtvolumen des Ausgangsstoffgemischs oder in einem Teilvolumen des Ausgangsstoffgemischs herbeigeführt werden.

Diese Weiterbildung des Verfahrens ermöglicht es, in Schritt (a) und/oder (b) eine Seifenbildung im Reaktionsansatz nach Schritt (a) zu verringern oder im Wesentlichen zu unterbinden, da durch die, gegebenenfalls mehrstufige, saure Vorveresterung weniger freie Fettsäuren im Reaktionsansatz vorliegen. Die verringerte Seifenbildung ist unter Verfahrensaspekten vorteilhaft, da die Bildung störender Emulsionen vermieden wird. Außerdem kommt die verringerte Seifenbildung der Produktausbeute zugute. Insbesondere bei Verwendung von Ausgangsstoffen mit sehr hohen Gehalten an freien Fettsäuren, wie Spaltfett, ist die erzielte Wirkung bedeutend.

In einem Schritt (e) kann eine Umesterung von Fettsäurederivaten in der aus Schritt (c) resultierenden, lipophilen Phase des Reaktionsansatzes, vorzugsweise in Gegenwart einer sich während der Umesterung ausbildenden oder zugesetzten zweiten oder weiteren hydrophilen Phase, bevorzugt einer zweiten oder weiteren alkalischen Glycerinphase, herbeigeführt werden. Dabei kann die zweite oder weitere hydrophile Phase jeweils ein alkalisches Milieu aufweisen und vorzugsweise Glycerin, Glykol oder ein Gemisch derselben enthalten oder daraus bestehen.

In einem Schritt (f) kann die zweite oder weitere hydrophile Phase aus dem aus Schritt (e) resultierenden Reaktionsansatz abgetrennt werden. Die Kombination der Schritte (e) und (f) kann einmal, zweimal, dreimal oder mit einer höheren Wiederholungsanzahl wiederholt werden.

Diese Weiterbildung des Verfahrens ermöglicht eine höhere Produktausbeute und eine weitere Verringerung des Schwefelgehalts im Produkt des Verfahrens. Jeder durchgeführte Veresterungs- und/oder Umesterungsschritt erhöht die Produktausbeute, gerade, wenn ein einzelner Veresterungs- und/oder Umesterungsschritt keine vollständige Umsetzung der Edukte in Produkte erzielen kann. Außerdem wird mit jeder abgetrennten hydrophilen Phase Schwefel in Form von darin gelösten oder daran adsorbierten Schwefelverbindungen aus dem Reaktionsansatz entnommen, was mit zunehmender Wiederholungszahl der Kombination der Schritte (e) und (f) letztlich noch geringere Schwefelgehalte im Reaktionsprodukt ermöglicht.

Im erfindungsgemäßen Verfahren kann auch bereits in Schritt (a) und/oder (b) eine basenkatalysierte Umesterung von Fettsäurederivaten im Reaktionsansatz herbeigeführt werden.

Diese Weiterbildung des Verfahrens ermöglicht aus den zuvor beschriebenen Gründen eine noch höhere Produktausbeute, da sie die Implementierung eines zusätzlichen Umesterungsschrittes beinhaltet.

Für die erfindungsgemäße Oxidation kann mindestens eines von den folgenden Oxidationsmitteln oder Oxidationsmittelzubereitungen oder eine beliebige Kombination derselben als das Oxidationsmittel in Schritt (a) eingesetzt werden: Wasserstoffperoxid, also H₂O₂, in wässeriger Lösung, bevorzugt mit einer Konzentration von 1 bis 60 Massen-% und besonders bevorzugt, in einer Konzentration von 30 Massen-%; Addukte des Wasserstoffperoxids, vorzugsweise Percarbonate, insbesondere Natrium-Percarbonat, also Na₂CO₃ x H₂O₂, Harnstoff-Peroxid, also Carbamid-Peroxid, darstellbar als N₂H₄CO x H₂O₂, mit verschiedenen Anteilen an aktivem H₂O₂, sowie deren Lösungen, Mischungen und Zubereitungen; Salze und salzartige Verbindungen des H₂O₂, wie Bariumperoxid, Natriumperoxid, sowie deren Lösungen, Mischungen und Zubereitungen; organische Peroxide, vorzugsweise Acetonperoxid oder Benzoylperoxid, sowie deren Lösungen, Mischungen und Zubereitungen; Perchlorate, Permanganate und Perborate.

Die wässrigen Peroxid-Formulierungen, besonders die Addukte des Wasserstoffperoxids, eignen sich dabei besonders gut zum Einsatz in Prozessschritten, in denen geringe Mengen Wasser nicht stören, wie der Vorbehandlung sauer umgeesterter Rohstoffe mit einer hydrophilen Phase, bevorzugt mit alkalischer Glycerinphase, weil sie hochwirksam sind und keine störenden Bodenkörper bilden, im Gegensatz etwa zu Natriumpercarbonat. Das wasserfreie Carbamid-Peroxid dagegen kann auch gut in späteren Verfahrensschritten eingesetzt werden, wo auch geringe Wassermengen stören würden, wie der Umesterung oder in einer alkalisch-oxidativen Nachbehandlung von Rohestern. Peressigsäure ist ähnlich wirksam, wie wässriges H₂O₂, setzt aber durch seinen Säurecharakter in unerwünschter Weise einen Teil des alkalischen Katalysators für die Umesterung um, so dass ein Mehrverbrauch an Katalysator die Folge ist.

In dem erfindungsgemäßen Verfahren kann wenigstens einer der Schritte (a), (b), (c), (d), (e) und (f), vorzugsweise die Entschwefelung einschließlich der Oxidation und der Umesterung und/oder Veresterung, in einem Temperaturbereich von 10° bis 160°C, bevorzugt bei Temperaturen von 40° bis 70°C und besonders bevorzugt bei 50° bis 65°C, stattfinden.

Der Vorteil höherer Reaktionstemperaturen von bis zu 160°C liegt in einer Beschleunigung der Reaktionsgeschwindigkeit, kann aber Nachteile in Form eines erhöhten Heizenergieverbrauchs mit sich bringen und erfordert in vielen Fällen die Verwendung von Druckgefäßen für die Reaktion, beispielsweise, um ein Verdampfen einer Alkoholkomponente für eine Umesterung und/oder Veresterung zu verhindern. Niedrige Reaktionstemperaturen gehen mit geringem Energieverbrauch, geringen Anforderungen an die Druckfestigkeit und die thermische Isolation der Anlage, aber auch mit geringen Reaktionsgeschwindigkeiten einher. In sehr vielen Fällen stellen Temperaturen in einem Bereich von 40°C bis 70°C einen guten Kompromiss unter Berücksichtigung aller oben genannten Parameter dar. In vielen Fällen sind, ebenfalls beruhend auf den obigen Erwägungen Temperaturen in einem Bereich von 50°C bis 65°C besonders vorteilhaft.

Das erfindungsgemäße Verfahren kann bei Normaldruck, insbesondere bei 1013,25 hPa, oder bei einem natürlicherweise vorgefundenen anderen Luftdruck, in Reaktionsgefäßen ohne besondere Druckfestigkeit oder, insbesondere wenn die Reaktionstemperatur die Siedetemperatur der eingesetzten Alkoholkomponente überschreitet, in Druckbehältern bei einem entsprechend höheren Druck durchgeführt werden.

Die Durchführung bei Normaldruck ermöglicht eine einfachere und kostengünstigere Gestaltung der erforderlichen Anlage und erhöht die Sicherheit des Betriebs der Anlage, da ein Austreten unter Druck stehender Fluide weitgehend ausgeschlossen wird. Andererseits ermöglicht die Verwendung von Druckbehältern höhere Reaktionstemperaturen und damit höhere Reaktionsgeschwindigkeiten.

Bei dem erfindungsgemäßen Verfahren können ein oder mehrere, gegebenenfalls alle, Verfahrensschritte bei einem pH-Wert von 9 oder höher, vorzugsweise 11 oder höher, also in einem deutlich alkalischen Milieu, durchgeführt werden.

Der Vorteil eines alkalischen pH-Wertes, insbesondere eines deutlich alkalischen pH-Wertes von 9 oder höher, oder gar 11 oder höher, liegt in der Einstellung des Oxidationspotentials der erfindungsgemäß eingesetzten Oxidationsmittel auf ein Niveau, das ausreichend für die Oxidation von elementarem Schwefel und/oder von Schwefelverbindungen ist, Fettsäuren und/oder Fettsäurederivate aber nur in unwesentlichem Ausmaß schädigt.

Zum Ablaufen der erfindungsgemäßen Oxidationsreaktion kann eine Zeit von bis zu 5 Stunden, bevorzugt bis zu 1 Stunde und besonders bevorzugt bis zu 30 Minuten, gelassen werden.

Lange Zeitspannen bringen ein vollständigeres Ablaufen der Oxidationsreaktion mit sich und können daher, insbesondere bei sehr schwefelhaltigen Ausgangsstoffen, erforderlich sein. Kurze Zeitspannen können bei Ausgangsstoffen mit moderateren Schwefelgehalten ausreichend sein und führen vorteilhafterweise zu kürzeren Verfahren und kürzerer Anlagenbelegung.

Die erfmdungsgemäße Oxidationsreaktion kann unter Zusatz von 0,01 bis 25 Massen-%, bevorzugt 0,1 bis 0,5 Massen-%, des verwendeten Oxidationsmittels in Bezug auf eine lipophile Phase des Reaktionsansatzes oder in Bezug auf den Reaktionsansatz durchgeführt werden, wobei bei Verwendung des Oxidationsmittels in Form einer Lösung, Mischung oder Zubereitung für die Dosierung immer nur die aktive Komponente, also das Oxidationsmittel selbst, betrachtet wird.

Bei einem Einsatz nur geringer Mengen des Oxidationsmittels ergeben sich Verbrauchsvorteile. Ferner kommt es nur zu einer nur äußerst geringeren Schädigung von Fettsäuren und/oder Fettsäurederivaten. Allerdings sind längere Reaktionszeiten erforderlich und die Oxidationsreaktion läuft gegebenenfalls weniger vollständig ab als beim Einsatz größerer Mengen des Oxidationsmittels. Der Einsatz größerer Mengen des Oxidationsmittels bringt jedoch Verbrauchsnachteile und eine geringfügig höhere, jedoch immer noch sehr geringe, Schädigung von Fettsäuren und/oder Fettsäurederivaten bei allerdings vorteilhaft kürzeren Reaktionszeiten mit sich.

Bei dem erfindungsgemäßen Verfahren kann in einem oder mehreren, gegebenenfalls in allen, Verfahrensschritten der Reaktionsansatz unter anderem zur Vergrößerung der Phasengrenzfläche und Steigerung der konvektiven Durchmischung gerührt oder durch ein anderes Agitationsverfahren in Bewegung gehalten und/oder homogenisiert werden.

Eine Vergrößerung der Phasengrenzfläche und eine Verbesserung der konvektiven Durchmischung sorgen für eine bessere Beweglichkeit von Edukten und Produkten innerhalb der Phasen und auch zwischen den Phasen und begünstigen ein schnelleres und auch vollständigeres Ablaufen der erfindungsgemäßen Reaktionen.

Die Aufgabe wird ferner durch die Verwendung nach Anspruch 14 gelöst.

So wird erfindungsgemäß ein Oxidationsmittels zum Oxidieren von elementarem Schwefel und/oder Schwefelverbindungen in Gegenwart von Fettsäurederivaten in einem Reaktionsansatz in einem Verfahren nach einem der Ansprüche 1 bis 13, verwendet. Dabei ist der Reaktionsansatz im Wesentlichen wasserfrei und weist ein alkalisches Milieu auf.

Die Vorteile einer solchen Verwendung entsprechen denen des erfindungsgemäßen Verfahrens.

Ausführungsbeispiele der Erfindung.

### Beispiel 1 - Entschwefelung mit H₂O₂-Lösung (nicht erfindungsgemäß)

Die Reaktionsschritte des Beispiels 1 lassen sich schematisch wie folgt darstellen:
Saure Vorveresterung bzw. Umesterung eines Teilvolumens des Ausgangsstoffgemischs; Oxidation/Extraktion; Um- bzw. Veresterung/Extraktion; Um- bzw. Veresterung/Extraktion; Waschen; Trocknen.

150 g eines Gemisches aus gleichen Teilen gebrauchten Speisefettes und rohem, mit Zitronensäure/Natronlauge entschleimtem Rapsöles wurden mit 50 g zweistufig mit H₂SO₄ und Methanol vorveresterten Spaltfettsäuren zu einer lipophilen Phase vermischt und auf 63 °C temperiert. Der Schwefelgehalt des Gemischs betrug 47 mg/kg. 60 g alkalische Glycerinphase, ebenfalls auf 63 °C temperiert, wurden zu der lipophilen Phase gegeben. 1 ml einer wässerigen H₂O₂-Lösung mit 30 Massen-% H₂O₂ in technischer Qualität wurde zum Reaktionsansatz zugegeben. Dieser wurde für 30 Minuten bei 63 °C gerührt, um eine Oxidation von elementarem Schwefel und/oder von Schwefelverbindungen ablaufen zu lassen. Die Glycerinphase, also die hydrophile Phase, wurde nach einem Absitzen lassen bei Raumtemperatur abgezogen und verworfen. Der Schwefelgehalt der so erhaltenen lipophilen Phase betrug nur noch 8 mg/kg.

Der so erhaltenen lipophilen Phase wurden 20 g Methanol in technischer Qualität und 5 ml einer 32%-igen Kaliummehtylatlösung in technischer Qualität zugesetzt und der erhaltene Reaktionsansatz wurde für 45 Minuten bei 55 °C gerührt, um Umesterungsreaktionen und/oder Veresterungsreaktionen ablaufen zu lassen. Nach einem Absitzen lassen wurde die hydrophile Phase, die sich im Verlauf der Reaktion unter anderem aus im Rahmen der Reaktion freigesetztem Glycerin gebildet hatte, abgezogen und verworfen.

Mit der so erhaltenen lipophilen Phase wurde die zuvor beschriebene Umesterung und/oder Veresterung mit 10 g Methanol in technischer Qualität und 1 g einer Kaliummethylatlösung mit 32 Masse-% Methylatgehalt in technischer Qualität wiederholt. Dann wurden 6 g Glycerin (99 Massen-%) in Pharmaqualität zugesetzt und gerührt. Nach einem Absitzen lassen wurde die hydrophile Phase abgezogen und verworfen. Die so erhaltene lipophile Phase wurde zuerst mit verdünnter Salzsäure und dann mit neutralem Wasser gewaschen, bevor sie bei 110 °C getrocknet wurde. Das erhaltene Produkt wies einen Schwefelgehalt von nur noch 5,1 mg/kg auf.

### Beispiel 2 - Entschwefelung mit Natrium-Percarbonat (nicht erfindungsgemäß)

Die Reaktionsschritte des Beispiels 2 lassen sich schematisch wie folgt darstellen:
Saure Vorveresterung bzw. Umesterung des Gesamtvolumens eines Ausgangsstoffgemischs/Oxidation/Um- bzw. Veresterung/Extraktion; Um- bzw. Veresterung/Extraktion; Waschen; Trocknen
100 g nicht entschleimten, gebrauchten Speisefetts mit einem Schwefelgehalt von 58 mg/kg wurden 13 g Methanol in technischer Qualität und 0,3 g Methansulfonsäure mit 99 Massen-% Stoffgehalt in Analysequalität zugesetzt. Der erhaltene Reaktionsansatz wurde für 30 Minuten bei 55 °C gerührt. Nach Zugabe von 0,5 g Natriumpercarbonat in technischer Qualität (granuliert für Waschmittel) wurde weitere 15 Minuten bei 55 °C gerührt. Daraufhin wurden 20 g alkalische Glycerinphase und 1 g einer 32%-igen Kaliummethylatlösung in technischer Qualität zugesetzt. Es wurde für weitere 30 Minuten bei 55 °C gerührt. Nach dem Absitzen lassen wurde die hydrophile Phase abgezogen und verworfen.

Die so erhaltene organische Phase wurde mit 0,5 g einer Kaliummethylatlösung mit 32 Masse-% Methylatgehalt in technischer Qualität und 0,5 g Methanol in technischer Qualität versetzt und für 30 Minuten bei 55 °C gerührt. Daraufhin wurden 5 ml Glycerin mit 99 Massen-% in Pharmaqualität und 5 ml Wasser zugesetzt. Es wurde für weitere 10 Minuten bei 55 °C gerührt. Nach einem Absitzen lassen wurde die hydrophile Phase abgezogen und verworfen. Die so erhaltene lipophile Phase wurde zuerst mit verdünnter Salzsäure (0,15 Massen-%) und dann mit neutralem, entmineralisiertem Wasser gewaschen, bevor sie bei 110 °C über Nacht im Trockenschrank getrocknet wurde. Das erhaltene Produkt wies einen Schwefelgehalt von nur noch 8,0 mg/kg auf.

### Beispiel 3 - Entschwefelung mit H₂O₂-Lösung

300 g eines Rohesters mit einem Schwefel-Gehalt von 14 mg/kg wurden mit Kaliummethylat deutlich alkalisch gemacht (pH 11), mit 6 g Tetrahydrofuran und 3 g wässrigem, 35%igem H₂O₂ versetzt und 2 Stunden bei 45 °C gerührt. Dann wurden 2 Gew.-% Glycerin zugegeben, 30 Minuten bei 45 °C ausgerührt und absitzen lassen. Der so behandelte Ester zeigte eine deutliche Farbaufhellung und wies einen Schwefelgehalt von 5,3 mg/kg auf.

### Beispiel 4 - Entschwefelung mit Natrium-Percarbonat

300 g eines Rohesters mit einem Schwefel-Gehalt von 70 mg/Kg wurden mit Kaliummethylat deutlich alkalisch gemacht (pH 11), mit 6 g Tetrahydrofuran und 3 g Natrium-Percarbonat versetzt und 2 Stunden bei 55 °C gerührt. Dann wurden 2 Gew.-% Glycerin zugegeben, 30 Minuten bei 45 °C ausgerührt und absitzen lassen. Der so behandelte Ester zeigte eine deutliche Farbaufhellung und wies einen Schwefelgehalt von 11 mg/kg auf.

### Beispiel 5 - Entschwefelung mit H₂O₂-Lösung

300 g eines Rohesters mit einem Schwefel-Gehalt von 120 mg/kg wurden mit Kaliummethylat deutlich alkalisch gemacht (pH 11), mit 6 g Isopropyliedenglycerol ("Solketal") und 3 g wässrigem, 35%igem H₂O₂ versetzt und 2 Stunden bei 70 °C gerührt. Dann wurden 2 Gew.-% Glycerin zugegeben, 30 Minuten bei 45 °C ausgerührt und absitzen lassen. Der so behandelte Ester zeigte eine deutliche Farbaufhellung und wies einen Schwefelgehalt von 20 mg/kg auf.

Anhand der Beispiele wird ersichtlich, dass eine Oxidation bei einem alkalischen pH-Wert geeignet ist, elementaren Schwefel und/oder Schwefelverbindungen in mit einer hydrophilen Phase extrahierbare Verbindungen zu überführen. Wie anhand der nicht nennenswerten Ausbeuteverluste ersichtlich wurde, treten unerwünschte Reaktionen wie Polymerisation, Verharzung und Teerbildung nicht in nennenswertem Umfang auf. Auch eine Fetthärtung konnte nicht festgestellt werden.

### Alternativen und weitere Offenbarung der Erfindung

Der im erfindungsgemäßen Verfahren hergestellte und zur Reaktion gebrachte Reaktionsansatz kann vorzugsweise frei von Ethanol sein, d.h., einen Ethanolgehalt zwischen 0 und 1 Massen%, vorzugsweise zwischen 0 und 0,1 Massen%, aufweisen. Durch diesen sehr geringen Ethanolgehalt oder sogar die Abwesenheit vom Ethanol im Reaktionsansatz wird die Bildung von Ethylestern im Reaktionsansatz vorteilhaft wirksam vermieden oder zumindest vermindert.

Ferner kann im erfindungsgemäßen Verfahren nach dem Abtrennen der ersten hydrophilen Phase gemäß dem Schritt (c) die Schwefelbestandteile von der ersten hydrophilen Phase beispielsweise mittels Destillation abgetrennt werden.

Des Weiteren kann im erfindungsgemäßen Verfahren nach dem Abtrennen der ersten hydrophilen Phase gemäß dem Schritt (c) die verbleibende hydrophobe Phase weiter mit bspw. Wasser gewaschen werden. Hierdurch kann eine weitere Abreicherung der Schwefelbestandteile in der hydrophoben Phase erzielt werden.

### Definitionen

Für die Zwecke der vorliegenden Patentanmeldung sind die nachfolgend aufgelisteten verwendeten Begriffe, für ein vereinfachtes Auffinden alphabetisch geordnet, wie folgt definiert:
"Absitzen lassen" bedeutet das Stehenlassen eines Zwei-Phasen-Systems bis sichtbar eine Phasentrennung im Wesentlichen stattgefunden hat.
"Abtrennen", beispielsweise in Bezug auf eine Phase, bedeutet ein möglichst vollständiges Abtrennen, in anderen Worten, ein im Wesentlichen vollständiges Abtrennen.
"Alkalische Glycerinphase" bezeichnet die durch ihren Gehalt an Alkalimethylat, Alkaliseifen,-Alkalihydroxid und/oder andere Alkalien, wie Tetramethylammoniumhydroxid alkalische, hoch glycerinhaltige Unterphase mit typischerweise mehr als 30 Massen-% Glycerin, die bei der derzeit üblichen, alkalisch katalysierten Umesterung von Glyceriden, insbesondere aus gegebenenfalls recycelten tierischen und/oder pflanzlichen Fetten und/oder Ölen, zu Monoestern, beispielsweise bei der Biodieselherstellung im Zuge einer Umesterung anfällt und abgetrennt werden kann. Beispielhafte Verfahren, die eine solche alkalische Glycerinphase ergeben, sind unter anderem in den Patentdokumenten DE 102 3 700 A1 und DE 102 57 215 A1 offenbart.
"Entschwefeln" bedeutet Verringern, graduell oder bis auf null, eines Schwefelgehalts in Form von elementarem Schwefel und/oder in Form von Schwefelverbindungen, also teilweises oder vollständiges Entfernen des Schwefels aus einem Material.
"Fettsäurederivate" sind chemische Verbindungen jeglicher Art, deren Molekülstruktur noch zu einem nicht unerheblichen Anteil durch einen oder mehrere Fettsäurereste geprägt wird. Bei der Erzeugung von Biodiesel kommt eine besondere Bedeutung den Estern von Fettsäuren mit kleinen einwertigen Alkoholen, vor allem Methanol, zu Monoestern zu.
"Fettsäuren" sind gesättigte oder ungesättigte Fettsäuren verschiedener Länge. Die vorteilhaften Wirkungen der Erfindung sind besonders im Hinblick auf, ggf. mehrfach, ungesättigte längere Fettsäuren von Bedeutung, wie sie in Pflanzenfetten und -ölen vorkommen, die beispielsweise für die Erzeugung von Biodiesel eingesetzt werden.
"Herbeiführen einer Umesterung und/oder Veresterung" bedeutet, dass eine Umesterung und/oder Veresterung durch Zugabe entsprechender Edukte, beispielsweise Methanol, und Herstellen entsprechender Reaktionsbedingungen (z.B. Temperierung, Agitation) herbeigeführt wird. Diese Reaktionen sind, wenn nicht anders erwähnt, basisch (Umesterung) bzw. sauer katalysiert (Veresterung).
"Hydrophile Phase": Die hydrophile Phase kann ein festes oder flüssiges Sorbens enthalten, beispielsweise Glycerin. Der pH-Wert der hydrophilen Phase ist auf größer 7, bevorzugt auf größer 9 und besonders bevorzugt auf größer 11 eingestellt. Die hydrophile Phase kann Schwefelverbindungen enthalten.
"Reaktionsansatz" bedeutet eine räumlich und zeitlich zusammengebrachte Kombination von Edukten, kann aber zusätzliche weitere Bestandteile, beispielsweise Katalysatoren oder Produkte enthalten. Die Edukte müssen nicht unbedingt unmittelbar miteinander reagieren. Die Reaktion kann auch erst nach dem Herstellen geeigneter Reaktionsbedingungen einsetzen. Auch eine Phase, die nicht unmittelbar an der Reaktion teilnimmt, kann zum Reaktionsansatz gezählt werden, da sie zum Beispiel durch Aufnahme von Reaktionsprodukten das Reaktionsgleichgewicht beeinflussen kann.
"Schwefelgehalt" bedeutet Schwefelgehalt in Form von elementarem Schwefel und Schwefelverbindungen in Summe ausgedrückt als mg Schwefel pro kg. Die Schwefelgehalte wurden mittels Atomemissionsspektrometrie mit induktiv gekoppeltem Plasma gemessen.
"Schwefelverbindung" bedeutet, im Gegensatz zu elementarem Schwefel, eine Verbindung in deren Molekülstruktur andere Atome als Schwefelatome eingebunden oder physikalisch adhäriert sind.
"Spaltfettsäuren" sind ein Nebenprodukt der Aufarbeitung, also der Entsäuerung und Raffination, von Rohfetten zu Speiseölen und Speisefetten, die im Gegensatz zu Fetten und Ölen einen erheblichen Anteil an freien Fettsäuren enthalten.
"Umesterungsreaktion und/oder Veresterungsreaktion". Erfindungsgemäß werden nicht genau definierte Produkte, wie Spaltfette oder Separatorfette, als Rohstoffe genutzt. Diese Rohstoffe enthalten unter anderem Triglyceride, Diglyceride, Monoglyceride und auch erhebliche Anteile an freien Fettsäuren. In der Regel werden daher sowohl Umesterungsreaktionen als auch Veresterungsreaktionen ablaufen. In Einzelfällen kann es vorkommen, dass nur einer der beiden Reaktionstypen abläuft.
"Vorverestern" im Sinne der Erfindung bezeichnet eine säurekatalysierte Umesterungsreaktion und/oder Veresterungsreaktion vor der erfindungsgemäßen Oxidation bei einem alkalischem pH-Wert. Sie dient der Reduzierung der Seifenbildung in späteren Verfahrensschritten, die im alkalischen Milieu stattfinden.
"Zur Reaktion bringen" bedeutet das Herbeiführen von Bedingungen, unter denen ein Reaktionsansatz im Sinne einer chemischen Umsetzung tatsächlich reagiert. Das kann nur ein einfaches Zusammenbringen von Edukten sein, aber auch das Erzeugen von Reaktionsbedingungen, die für eine jeweilige Reaktion besonders günstig sind. Letzteres beinhaltet beispielsweise ein Temperieren oder eine Agitation zur Vergrößerung einer Phasengrenzfläche und einer Verstärkung der Konvektion.

## Patentansprüche

1. Verfahren zum Oxidieren von elementarem Schwefel und/oder von Schwefelverbindungen in Gegenwart von Fettsäurederivaten, umfassend wenigstens die Schritte:
(a) Herstellen eines Reaktionsansatzes, enthaltend ein Oxidationsmittel und ein Ausgangsstoffgemisch;
wobei das Ausgangsstoffgemisch Fettsäurederivate enthält;
wobei das Ausgangsstoffgemisch elementaren Schwefel und/oder Schwefelverbindungen enthält;
wobei der Anteil an Wasser im Reaktionsansatz zwischen 0 und 2 Massen-% beträgt;
wobei der Reaktionsansatz ein alkalisches Milieu aufweist; und
(b) zur Reaktion bringen des in Schritt (a) hergestellten Reaktionsansatzes;
wobei der elementare Schwefel in Gegenwart der Fettsäurederivate oxidiert wird und/oder die Schwefelverbindungen in Gegenwart der Fettsäurederivate oxidiert werden;
wobei dem Reaktionsansatz in Schritt (a) und/oder nach Schritt (b) eine erste hydrophile Phase zugegeben wird; und
wobei die erste hydrophile Phase ein alkalisches Milieu aufweist, wobei
alkalisches Milieu bedeutet, dass der pH-Wert der ersten hydrophilen Phase bei größer 7 liegt, und, falls die erste hydrophile Phase wasserfrei ist, dass, wenn die erste hydrophile Phase mit Wasser bidest. im Volumenverhältnis 1:1 ausgeschüttelt wird, der pH-Wert der erhaltenen wässerigen Phase bei größer 7, liegt, **dadurch gekennzeichnet, dass**
dem Reaktionsansatz in Schritt (a) und/oder nach Schritt (b) ein Phasentransfermittel zugegeben wird;
wobei das Phasentransfermittel eine Substanz oder eine beliebige Kombination von Substanzen enthält oder daraus besteht, ausgewählt aus einer Gruppe, die besteht aus:
Ether, insbesondere Tetrahydrofuran, 1,4-Dioxan; Keton, insbesondere Aceton; Isopropylidenglycerin, sowie deren Lösungen, Mischungen und Zubereitungen;
wobei das Phasentransfermittel nach der Zugabe zum Reaktionsansatz vorzugsweise in einem Anteil von bis zu 2 Massen-%, insbesondere zwischen 1 und 2 Massen-%, bezogen auf den Reaktionsansatz vorliegt.

2. Verfahren nach Anspruch 1, **dadurch gekennzeichnet, dass** die erste hydrophile Phase Glycerin, Glykol oder ein Gemisch derselben enthält oder daraus besteht.

3. Verfahren nach Anspruch 1 oder 2, **dadurch gekennzeichnet, dass** das Verfahren ferner den Schritt umfasst:
(c) Abtrennen der ersten hydrophilen Phase;
wobei die erste hydrophile Phase Schwefelverbindungen enthält, die in Schritt (a) und/oder Schritt (b) durch Oxidation aus dem im Ausgangsstoffgemisch enthaltenen elementaren Schwefel und/oder aus den im Ausgangsstoffgemisch enthaltenen Schwefelverbindungen hervorgegangen sind oder die bereits in der Form, in welcher sie in der ersten hydrophilen Phase enthalten sind, im Ausgangsstoffgemisch vorlagen.

4. Verfahren nach einem der Ansprüche 1 bis 3, **dadurch gekennzeichnet, dass** das Verfahren ferner den Schritt umfasst:
(d) vor Schritt (a), Herbeiführen einer säurekatalysierten Umesterung von Fettsäurederivaten im Gesamtvolumen des Ausgangsstoffgemischs oder in einem Teilvolumen des Ausgangsstoffgemischs.

5. Verfahren nach Anspruch 3 oder 4, **dadurch gekennzeichnet, dass** das Verfahren ferner den Schritt umfasst:
(e) Herbeiführen einer Umesterung von Fettsäurederivaten in der aus Schritt (c) resultierenden, lipophilen Phase des Reaktionsansatzes;
vorzugsweise in Gegenwart einer sich während der Umesterung ausbildenden oder zugesetzten zweiten oder weiteren hydrophilen Phase, bevorzugt einer zweiten oder weiteren alkalischen Glycerinphase; und
(f) vorzugsweise Abtrennen der zweiten oder weiteren hydrophilen Phase aus dem Schritt (e) resultierenden Reaktionsansatz;
wobei die Kombination der Schritte (e) und (f) vorzugsweise einmal, zweimal, dreimal oder mit einer höheren Wiederholungsanzahl wiederholt wird.

6. Verfahren nach einem der Ansprüche 1 bis 5, **dadurch gekennzeichnet, dass** in Schritt (a) und/oder (b) eine basenkatalysierte Umesterung von Fettsäurederivaten im Reaktionsansatz herbeigeführt wird.

7. Verfahren nach einem der Ansprüche 1 bis 6, **dadurch gekennzeichnet, dass** in Schritt (a) als das Oxidationsmittel zumindest eines von den folgenden Oxidationsmitteln oder Oxidationsmittelzubereitungen oder eine beliebige Kombination derselben eingesetzt wird:
Wasserstoffperoxid, also H₂O₂, in wässeriger Lösung, bevorzugt mit einer Konzentration von 1 bis 60 Massen-% und besonders bevorzugt in einer Konzentration von 30 Massen-%;
Addukte des Wasserstoffperoxids, vorzugsweise Percarbonate, insbesondere Natrium-Percarbonat, also Na₂CO₃ x H₂O₂, Harnstoff-Peroxid, also Carbamid-Peroxid, darstellbar als N₂H₄CO x H₂O₂, mit verschiedenen Anteilen an aktivem H₂O₂; sowie deren Lösungen, Mischungen und Zubereitungen;
Salze und salzartige Verbindungen des H₂O₂, vorzugsweise Bariumperoxid, Natriumperoxid, sowie deren Lösungen, Mischungen und Zubereitungen;
organische Peroxide, vorzugsweise Acetonperoxid oder Benzoylperoxid, sowie deren Lösungen, Mischungen und Zubereitungen; und
Perchlorate, Permanganate, Perborate, Ozon und Ozonide.

8. Verfahren nach einem der Ansprüche 1 bis 7, **dadurch gekennzeichnet, dass** wenigstens einer der Schritte (a), (b), (c), (d), (e) und (f), vorzugsweise die Entschwefelung einschließlich der Oxidation und der Umesterung, in einem Temperaturbereich von 10 bis 160 °C, vorzugsweise von 40 bis 70 ° C, insbesondere von 50 bis 65 °C, stattfindet.

9. Verfahren nach einem der Ansprüche 1 bis 8, **dadurch gekennzeichnet, dass** das Verfahren bei Normaldruck, insbesondere bei 1013,25 hPa oder bei einem natürlicherweise vorgefundenen anderen Luftdruck, in Reaktionsgefäßen ohne besondere Druckfestigkeit durchgeführt wird; oder, insbesondere wenn die Reaktionstemperatur die Siedetemperatur einer für die Umesterung eingesetzten Alkoholkomponente überschreitet, in Druckbehältern bei einem entsprechend höheren Druck durchgeführt wird.

10. Verfahren nach einem der Ansprüche 1 bis 9, **dadurch gekennzeichnet, dass** ein oder mehrere, vorzugsweise alle, Verfahrensschritte in einem alkalischen Milieu, vorzugsweise bei einem pH-Wert von 9 oder höher, ferner vorzugsweise 11 oder höher, durchgeführt werden.

11. Verfahren nach einem der Ansprüche 1 bis 10, **dadurch gekennzeichnet, dass** dem Reaktionsansatz für die Reaktion mit dem Oxidationsmittel eine Zeit von bis zu 5 Stunden, bevorzugt bis zu 1 Stunde und besonders bevorzugt bis zu 30 Minuten, gelassen wird.

12. Verfahren nach einem der Ansprüche 1 bis 11, **dadurch gekennzeichnet, dass** die Reaktion unter Zusatz von 0,01 bis 25 Massen-%, bevorzugt 0,1 bis 0,5 Massen-%, des verwendeten Oxidationsmittels in Bezug auf eine lipophile Phase des Reaktionsansatzes oder in Bezug auf den Reaktionsansatz durchgeführt wird, wobei bei Verwendung des Oxidationsmittels in Form einer Lösung, Mischung oder Zubereitung für die Dosierung immer nur die aktive Komponente, also das Oxidationsmittel selbst, betrachtet wird.

13. Verfahren nach einem der Ansprüche 1 bis 12, **dadurch gekennzeichnet, dass** in einem oder mehreren, gegebenenfalls in allen, Verfahrensschritten der Reaktionsansatz unter anderem zur Vergrößerung der Phasengrenzfläche und Steigerung der konvektiven Durchmischung gerührt oder durch ein anderes Agitationsverfahren in Bewegung gehalten wird.

14. Verwendung eines Oxidationsmittels zum Oxidieren von elementarem Schwefel und/oder Schwefelverbindungen in Gegenwart von Fettsäurederivaten in einem Reaktionsansatz in einem Verfahren nach einem der Ansprüche 1 bis 13.

## Claims

1. Process for oxidising elemental sulfur and/or sulfur compounds in the presence of fatty acid derivatives, said process comprising at least the following steps:
a) preparation of a reaction mixture that comprises an oxidising agent and a mixture of starting materials;
wherein the mixture of starting materials comprises fatty acid derivatives; wherein the mixture of starting materials comprises elemental sulfur and/or sulfur compounds;
wherein the water content of the reaction mixture is between 0 and 2 per cent by weight;
wherein the reaction mixture is alkaline; and
b) making the reaction mixture prepared in step (a) react;
wherein the elemental sulfur is oxidised in the presence of the fatty acid derivatives and/or the sulfur compounds are oxidised in the presence of the fatty acid derivatives;
wherein a first hydrophilic phase is added to the reaction mixture in step (a) and/or after step (b): and
wherein the first hydrophilic phase is alkaline, wherein
*alkaline* means that the pH of the first hydrophilic phase is more than 7, and, in the case that the first hydrophilic phase is anhydrous, that when the first hydrophilic phase is extracted with double distilled water in the volumetric ratio of 1:1, the pH of the resulting aqueous phase is more than 7, **characterised in that**
a phase transfer agent is added to the reaction mixture in step (a) and/or after step (b);
wherein the phase transfer agent comprises or consists of a substance or any combination of substances, selected from the group consisting of:
an ether, in particular tetrahydrofuran, 1,4-dioxane; a ketone, in particular acetone; isopropylidene glycerol, as well as their solutions, mixtures and preparations;
wherein the phase transfer agent, after having been added to the reaction mixture, is preferably present in an amount of up to 2 weight %, in particular between 1 and 2 weight %, based on the reaction mixture.

2. Process according to claim 1, **characterised in that** the first hydrophilic phase comprises or consists of glycerol, glycol or a mixture thereof.

3. Process according to claim 1 or 2, **characterised in that** the process further includes the step:
(c) separation of the first hydrophilic phase;
wherein the first hydrophilic phase comprises sulfur compounds that resulted from the oxidation in step (a) and/or step (b) of the elemental sulfur comprised in the mixture of starting materials and/or of the sulfur compounds comprised in the mixture of starting materials, or which were already present in the mixture of starting materials in the form in which they are comprised in the first hydrophilic phase.

4. Process according to one of claims 1 to 3, **characterised in that** the process further includes the step:
(d) prior to step (a), to bring about an acid-catalysed transesterification of the fatty acid derivatives in the total volume of the mixture of starting materials or in a partial volume of the mixture of starting materials.

5. Process according to claim 3 or 4, **characterised in that** the process further includes the step:
(e) to bring about a transesterification of the fatty acid derivatives in the lipophilic phase of the reaction mixture that resulted from step (c);
preferably in the presence of a hydrophilic phase formed during the transesterification or of an added second or further hydrophilic phase, preferably of a second or further alkaline glycerol phase; and
(f) preferably separating the second or further hydrophilic phase from the reaction mixture resulting from step (e);
wherein the combination of steps (e) and (f) is repeated once, three times or more.

6. Process according to one of claims 1 to 5, **characterised in that** a base-catalysed transesterification of the fatty acid derivatives in the reaction mixture is brought about in step (a) and/or (b).

7. Process according to one of claims 1 to 6, **characterised in that** at least one of the following oxidising agents or oxidising agent preparations or any combination thereof is employed as the oxidising agent in step (a):
hydrogen peroxide, i.e. H₂O₂, in aqueous solution, preferably in a concentration of 1 to 60 weight % and particularly preferably in a concentration of 30 weight %;
Adducts of hydrogen peroxide, preferably percarbonates, in particular sodium percarbonate, i.e. Na₂CO₃ x H₂O₂, urea peroxide, i.e. carbamide peroxide, depictable as N₂H₄CO x H₂O₂, with various contents of H₂O₂, as well as their solutions, mixtures and preparations;
salts and salt-like compounds of H₂O₂, preferably barium peroxide, sodium peroxide, as well as their solutions, mixtures and preparations;
organic peroxides, preferably acetone peroxide or benzoyl peroxide, as well as their solutions, mixtures and preparations; and
perchlorates, permanganates, perborates, ozone and ozonides.

8. Process according to one of claims 1 to 7, **characterised in that** at least one of the steps (a), (b), (c), (d), (e) and (f), preferably the desulfurisation including the oxidation and the transesterification, is carried out in a temperature range of 10 to 160 °C, preferably 40 to 70 °C, in particular 50 to 65 °C.

9. Process according to one of claims 1 to 8, **characterised in that** the process is carried out under normal pressure, in particular at 1013.25 hPa or at a naturally encountered other ambient pressure, in reaction vessels without particular pressure resistance, or, particularly when the reaction temperature exceeds the boiling point of one of the alcohol components employed for the transesterification, is carried out in pressure vessels at an appropriate higher pressure.

10. Process according to one of claims 1 to 9, **characterised in that** one or more, preferably all process steps, are carried out in an alkaline medium, preferably at a pH of 9 or greater, more preferably 11 or greater.

11. Process according to one of claims 1 to 10, **characterised in that** the reaction mixture is left to react with the oxidising agent for up to 5 hours, preferably up to 1 hour and particularly preferably up to 30 minutes.

12. Process according to one of claims 1 to 11, **characterised in that** the reaction is carried out with an added 0.01 to 25 weight %, preferably 0.1 to 0.5 weight % of the oxidising agent, based on the lipophilic phase of the reaction mixture or based on the reaction mixture, wherein the dosed quantity refers only to the active component, i.e. the oxidising agent itself, when the oxidising agent is used in the form of a solution, mixture or preparation.

13. Process according to one of claims 1 to 12, **characterised in that** in one or more, optionally in all process steps, the reaction mixture is stirred or kept moving by another agitation process in order, *inter alia*, to increase the phase boundary surface and boost the convective mixing.

14. Use of an oxidising agent to oxidise elemental sulfur and/or sulfur compounds in the presence of fatty acid derivatives in a reaction mixture in a process according to one of claims 1 to 13.

## Revendications

1. Procédé d'oxydation de soufre élémentaire et/ou de composés soufrés en présence de dérivés d'acide gras, comprenant au moins les étapes consistant à :
(a) préparer un mélange réactionnel contenant un agent oxydant et un mélange de produit de départ ;
dans lequel le mélange de produit de départ contient des dérivés d'acide gras ;
dans lequel le mélange de produit de départ contient du soufre élémentaire et/ou des composés soufrés ;
dans lequel la proportion d'eau dans le mélange réactionnel est comprise entre 0 et 2 % en masse ;
dans lequel le mélange réactionnel présente un milieu alcalin ; et
(b) faire réagir le mélange réactionnel préparé à l'étape (a) ; dans lequel le soufre élémentaire est oxydé en présence des dérivés d'acide gras et/ou les composés soufrés sont oxydés en présence des dérivés d'acide gras ;
dans lequel une première phase hydrophile est ajoutée au mélange réactionnel dans l'étape (a) et/ou après l'étape (b) ; et
dans lequel la première phase hydrophile présente un milieu alcalin, dans lequel milieu alcalin signifie que le pH de la première phase hydrophile est supérieur à 7 et, si la première phase hydrophile est dépourvue d'eau, que lorsque la première phase hydrophile est bidistillée à l'eau avec un rapport volumique de 1 : 1, le pH de la phase aqueuse résultante est supérieur à 7, **caractérisé en ce que**
un agent de transfert de phase est ajouté au mélange réactionnel dans l'étape (a) et/ou après l'étape (b) ;
dans lequel l'agent de transfert de phase contient ou consiste en une substance ou toute combinaison de substances sélectionnées dans un groupe qui consiste en :
un éther, en particulier du tétrahydrofurane, du 1,4-dioxane ; de la cétone, en particulier de l'acétone ; de l'isopropylidèneglycérol, et des solutions, mélanges et préparations de ceux-ci ; dans lequel l'agent de transfert de phase, après addition au mélange réactionnel, est de préférence présent dans une proportion allant jusqu'à 2 % en masse, en particulier comprise entre 1 et 2 % en masse, sur la base du mélange réactionnel.

2. Procédé selon la revendication 1, **caractérisé en ce que** la première phase hydrophile contient ou consiste en du glycérol, du glycol ou un mélange de ceux-ci.

3. Procédé selon la revendication 1 ou 2, **caractérisé en ce que** le procédé comprend en outre l'étape suivante consistant à :
(c) séparer la première phase hydrophile ;
dans lequel la première phase hydrophile contient des composés soufrés qui sont issus de l'étape (a) et/ou de l'étape (b) par oxydation à partir du soufre élémentaire contenu dans le mélange de produit de départ et/ou des composés soufrés présents dans le mélange de produit de départ ou qui existe déjà dans le mélange de produit de départ sous la forme dans laquelle ils sont contenus dans la première phase hydrophile.

4. Procédé selon l'une quelconque des revendications 1 à 3, **caractérisé en ce que** le procédé comprend en outre l'étape consistant à :
(d) avant l'étape (a), induire une transestérification catalysée par un acide de dérivés d'acide gras dans le volume total du mélange de produit de départ ou dans un volume partiel du mélange de produit de départ.

5. Procédé selon la revendication 3 ou 4, **caractérisé en ce que** le procédé comprend en outre les étapes consistant à :
(e) effectuer une transestérification de dérivés d'acide gras dans la phase lipophile du mélange réactionnel résultant de l'étape (c) ;
de préférence en présence d'une seconde phase ou d'une phase hydrophile supplémentaire qui se forme ou s'ajoute au cours de la transestérification, de préférence d'une seconde ou d'une phase de glycérol alcaline supplémentaire ; et
(f) séparer de préférence la seconde ou la phase hydrophile supplémentaire du mélange réactionnel résultant de l'étape (e) ;
dans lequel la combinaison des étapes (e) et (f) est de préférence répétée une fois, deux fois, trois fois ou avec un nombre de répétitions supérieur.

6. Procédé selon l'une quelconque des revendications 1 à 5, **caractérisé en ce que** lors de l'étape (a) et/ou (b) une transestérification catalysée par une base de dérivés d'acide gras est induite dans le mélange réactionnel.

7. Procédé selon l'une quelconque des revendications 1 à 6, **caractérisé en ce que** lors de l'étape (a), au moins l'un des agents oxydants ou l'une des préparations d'agents oxydants suivant(e)s, ou toute combinaison de ceux-ci, est utilisé(e) en tant qu'agent oxydant :
du peroxyde d'hydrogène, à savoir H₂O₂, en solution aqueuse, de préférence avec une concentration de 1 à 60 % en masse et de manière particulièrement préférée à une concentration de 30 % en masse ;
des produits d'addition du peroxyde d'hydrogène, de préférence des percarbonates, en particulier du percarbonate de sodium, c'est-à-dire Na₂CO₃ x H₂O₂, du peroxyde d'urée, c'est-à-dire du peroxyde de carbamide, pouvant être préparés sous la forme de N₂H₄CO x H₂O₂, avec différentes proportions d'H₂O₂ actif ; et des solutions, mélanges et préparations de ceux-ci ;
des sels et composés sous forme de sel du H₂O₂, de préférence du peroxyde de baryum, du peroxyde de sodium, ainsi que des solutions, mélanges et préparations de ceux-ci ;
des peroxydes organiques, de préférence du peroxyde d'acétone ou du peroxyde de benzoyle, ainsi que des solutions, mélanges et préparations de ceux-ci ; et
des perchlorates, des permanganates, des perborates, de l'ozone et de l'ozonide.

8. Procédé selon l'une quelconque des revendications 1 à 7, **caractérisé en ce qu'**au moins une des étapes (a), (b), (c), (d), (e) et (f), de préférence la désulfuration, y compris l'oxydation et la transestérification, a lieu dans une plage de température allant de 10 à 160 °C, de préférence de 40 à 70 °C, en particulier de 50 à 65 °C.

9. Procédé selon l'une quelconque des revendications 1 à 8, **caractérisé en ce que** le procédé est mis en œuvre, dans des récipients de réaction sans résistance particulière à la pression, à une pression normale, en particulier à 1 013,25 hPa ou à une autre pression d'air trouvée naturellement ; ou, en particulier lorsque la température de réaction dépasse le point d'ébullition d'un composant alcool utilisé pour la transestérification, est mis en oeuvre dans des récipients sous pression à une pression plus élevée correspondante.

10. Procédé selon l'une quelconque des revendications 1 à 9, **caractérisé en ce qu'**une ou plusieurs, de préférence toutes les étapes de traitement dans un milieu alcalin, sont mises en œuvre de préférence à un pH de 9 ou plus, de manière plus préférée de 11 ou plus.

11. Procédé selon l'une quelconque des revendications 1 à 10, **caractérisé en ce que** pour la réaction avec l'agent oxydant, le mélange réactionnel va disposer d'une durée allant jusqu'à 5 heures, de préférence jusqu'à 1 heure, et plus préférentiellement jusqu'à 30 minutes.

12. Procédé selon l'une quelconque des revendications 1 à 11, **caractérisé en ce que** la réaction est mise en œuvre avec addition de 0,01 à 25 % en masse, de préférence de 0,1 à 0,5 % en masse, de l'agent oxydant utilisé par rapport à une phase lipophile du mélange réactionnel ou par rapport au mélange réactionnel, dans lequel en utilisant l'agent oxydant sous la forme d'une solution, d'un mélange ou d'une préparation pour le dosage, le composant actif, c'est-à-dire l'agent oxydant lui-même, est toujours considéré.

13. Procédé selon l'une quelconque des revendications 1 à 12, **caractérisé en ce que** dans une ou plusieurs, facultativement dans toutes les étapes de procédé, le mélange réactionnel est agité entre autres pour augmenter les interfaces des phases et améliorer le mélange convectif, ou est maintenu en mouvement par un autre procédé d'agitation.

14. Utilisation d'un agent oxydant pour oxyder du soufre élémentaire et/ou des composés soufrés en présence de dérivés d'acide gras dans un mélange réactionnel dans un procédé selon l'une quelconque des revendications 1 à 13.
